# EUROPÄISCHE PATENTSCHRIFT

(11) **EP 2 019 241 B1**
(45) Veröffentlichungstag und Bekanntmachung des Hinweises auf die Patenterteilung: **29.12.2010**
(21) Anmeldenummer: 08012274.0
(22) Anmeldetag: 08.07.2008
(51) Int. Cl.: F16L 9/00, F16L 9/22

(54) **Flachkanal zur Leitung von gasförmigen Medien**
Flat channel for guiding gaseous media
Canal plat destiné au guidage de milieux gazeux

(30) Priorität: 25.07.2007 DE 102007034595
(43) Veröffentlichungstag der Anmeldung: 28.01.2009
(73) Patentinhaber: Südluft Systemtechnik GmbH & Co. KG, 71032 Böblingen (DE)
(72) Erfinder: Velev, Raytcho, 62100 Brno (CZ)
(74) Vertreter: Ostertag, Ulrich

(56) Entgegenhaltungen:
- DE-U1- 8 702 253
- US-A- 4 328 694
- US-A- 4 328 981

## Beschreibung

Die Erfindung betrifft einen Flachkanal zur Leitung von gasförmigen Medien mit wenigstens einem einstückigen Wandelement aus biegsamem Material, das eine Kanalwand umfasst, die zwei entlang einer Wandbiegelinie zueinander rechtwinklig gebogene Wandbereiche aufweist, wobei wenigstens einer der Wandbereiche einen parallel zur Wandbiegelinie verlaufende Randstreifen zum umfangsseitigen Verbinden mit einem weiteren Wandelement hat, wobei weiter das Wandelement einen senkrecht zur Wandbiegelinie verlaufenden zumindest an einer durch die Wandbereiche gebildeten Ecke umlaufenden Stirnflansch aufweist, und der Stirnflansch zusammengesetzt ist aus
a) einem Stirnflanschstreifen, der sich in Richtung der Wandbiegelinie an den Randstreifen des einen Wandbereichs anschließt und gegenüber dem Randstreifen rechtwinklig abgebogen ist,
b) einem Stirnflanscheckbereich, der senkrecht zur Wandbiegelinie des anderen Wandbereichs abgebogen ist.

Aus der DE 37 04 633 C2 ist ein Wandelement für einen derartigen Flachkanal bekannt. Das dortige Wandelement ist aus einem ebenen Blechzuschnitt hergestellt, wobei im Bereich der späteren Ecken der Kanalwand in diesem Zuschnitt endseitig Schnitte eingebracht werden. Beim Abwinkeln der Stirnflansche klaffen allerdings die eckseitigen Schnitte, so dass im Eckbereich Material fehlt. Diese Klaffung wird durch Einsetzen eines Ergänzungsteils geschlossen, welches im Beispielsfalle eingeschweißt und dort verschliffen ist. Dieses Ergänzungsteil muss separat gefertigt werden.

Ein ähnhlicher Flachkanal ist auch aus Dokument DE 87 02 253 U bekannt.

Aufgabe der vorliegenden Erfindung ist es, einen Flachkanal der eingangs genannten Art so auszugestalten, der mit einem möglichst geringen Herstellungs- und Materialaufwand realisierbar ist.

Diese Aufgabe wird erfindungsgemäß dadurch gelöst, dass der Randflanschbereich und der Stirnflanscheckbereich des Stirnflanschstreifens vor der Biegung des Wandelements durch einen etwa L-förmigen zusammenhängenden Trennbereich voneinander getrennt sind, dessen einer Schenkel sich in Richtung der Randbiegelinie des abgebogenen Randstreifens von der Stirnbiegelinie des abgebogenen Stirnflanschstreifens bis zum Rand des ungebogenen Wandelements erstreckt und dessen anderer Schenkel sich in Richtung der Stirnbiegelinie von der Wandbiegelinie bis zur Randbiegelinie erstreckt und dort in den ersten Schenkel übergeht.

Erfindungsgemäß bewirkt also der spezielle L-förmige Trennbereich, dass ein Randflanschbereich und ein Stirnflanscheckbereich realisiert werden, welche nach einem speziellen Biegevorgang so zueinander ausgerichtet sind, dass ein durchgängiger Stirnflansch entsteht. Da der Stirnflansch so keine Lücken aufweist, ist das Einsetzen eines separaten Ergänzungsteils nicht erforderlich. Auf diese Weise wird der Arbeitsaufwand reduziert, da die separate Herstellung des Ergänzungsteils und der Einbau desselben wegfällt. Es fallen so auch weniger Materialabfälle an als beim Herstellen des separaten Ergänzungsteils gemäß dem Stand der Technik.

Bei einer vorteilhaften Ausführungsform gemäß Anspruch 2 kann die Abmessung des Randflanschbereichs in Richtung der Wandbiegelinie in ungebogenem Zustand so groß sein wie der Abstand zwischen der Wandbiegelinie und der Randbiegelinie. Auf diese Weise erstreckt sich der Randflanschbereich über die gesamte Abmessung des den Randflanschbereich aufweisenden Wandbereichs, so dass er lückenlos an dem Stirnflanscheckbereich anliegt.

Zweckmäßigerweise kann gemäß Anspruch 3 die Abmessung des Randflanschbereichs in Richtung der Wandbiegelinie in ungebogenem Zustand wenigstens so groß sein wie die Abmessung des Stirnflanscheckbereichs in Richtung der Wandbiegelinie. Dies hat den Vorteil, dass die Ränder des Randflanschbereichs und des Stirnflanscheckbereichs entlang eines geraden Randes eines Materialstücks verlaufen können, so dass dort kein Material entfernt werden muss, um eine Abstufung zu erreichen, die notwendig wäre, wenn die oben genannten Ausdehnungen sich nicht entsprechen.

Vorteilhafterweise kann gemäß Anspruch 4 die Abmessung des Randflanschbereichs senkrecht zur Wandbiegelinie in ungebogenem Zustand der Abmessung des Stirnflanscheckbereichs senkrecht zur Wandbiegelinie entsprechen. Auf diese Weise gehen die Konturen des der Randbiegekante abgewandten Randes des Randflanschbereichs in die Konturen des dortigen Randes des Stirnflanscheckbereichs über.

Um die Stabilität des Wandelementes und dessen Festigkeit zu erhöhen, kann gemäß Anspruch 5 der Stirnflansch wenigstens im Bereich des Stirnflanschstreifens einen zurückgebogenen Stabilisierungsstreifen aufweisen.

Zweckmäßigerweise kann gemäß Anspruch 6 die Abmessung des Stirnflanscheckbereichs in Richtung der Wandbiegelinie ausschließlich des Stabilisierungsstreifens in ungebogenem Zustand der Abmessung des Randflanschbereichs in Richtung der Wandbiegelinie entsprechen.

Bei einer weiteren vorteilhaften Ausführungsform gemäß Anspruch 7 können die angrenzenden Ränder des Randflanschbereichs und des Stirnflanscheckbereichs miteinander verschweißt, insbesondere stumpfgeschweißt, sein. Auf diese Weise entsteht eine stabile zusammenhängende Verbindung, welche nach dem Schleifen der Schweißnähte den Eindruck eines von Hause aus einstückigen umlaufenden Stirnflansches erzeugt.

Um auf einfach Weise aus wenigen Bauteilen einen wannenförmigen Flachkanal zu realisieren, können gemäß Anspruch 8 zwei Wandelemente an einander entsprechenden Wandbereichen mit jeweils einem Randstreifen mittelbar oder unmittelbar miteinander verbunden sein.

Eine größere Wannenbreite kann gemäß Anspruch 9 dadurch erzeugt werden, dass die beiden Wandelemente über ein Wandzwischenstück miteinander verbunden sind.

Bei einer anderen vorteilhaften Ausführungsform gemäß Anspruch 10 kann das Wandelement zwei parallele, jeweils einen Randstreifen aufweisende Wandbereiche umfassen, die mit dem zu ihnen senkrecht verlaufenden Wandbereich insgesamt wannenförmig verbunden sind. Auf diese Weise ist einfach mit nur einem Bauteil ein einstückiger wannenförmiger Flachkanal realisierbar.

Ferner kann gemäß Anspruch 11 das Wandelement einfach aus einer ebenen Platte insbesondere mittels Lasertechnik geschnitten oder gestanzt und anschließend insbesondere winklig gebogen, insbesondere gekantet, sein.

Das Wandelement kann gemäß Anspruch 12 aus Metall, insbesondere Blech, sein, so kann es einfach bearbeitet, insbesondere geschnitten und gebogen werden.

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden; es zeigen
- Figur 1: schematisch eine isometrische Darstellung ei- nes Wandelements für einen Flachkanal;
- Figur 2: schematisch eine Detailansicht eines Eckbe- reichs des Wandelements aus Figur 1;
- Figur 3: eine längsseitige Ansicht des Wandelements aus den Figuren 1 und 2 in Richtung des Pfeils III aus Figur 1 betrachtet;
- Figur 4: eine stirnseitige Ansicht auf das Wandelement aus den Figuren 1 bis 3;
- Figur 5: eine Draufsicht auf das ebene, zugeschnittene Blech, aus dem das Wandelement aus den Figuren 1 bis 4 gekantet ist;
- Figur 6: schematisch einen Abschnitt eines Flachka- nals, welcher zwei Wandelemente umfasst, die zu dem Wandelement aus den Figuren 1 bis 5 ähnlich und über ein Wandzwischenstück mit- einander verbunden sind;
- Figur 7: schematisch einen Ausschnitt eines ebenen Schnittmusters in einem Eckbereich eines der Wandelemente aus Figur 6;
- Figur 8: schematisch einen Abschnitt eines wannenför- migen Flachkanals, bei welchem beide Wandele- mente einstückig aneinander angeformt sind;
- Figur 9: schematisch einen Ausschnitt eines ebenen Blechs in zwei Eckbereichen, aus dem der wan- nenförmige Flachkanal aus Figur 8 gekantet ist.

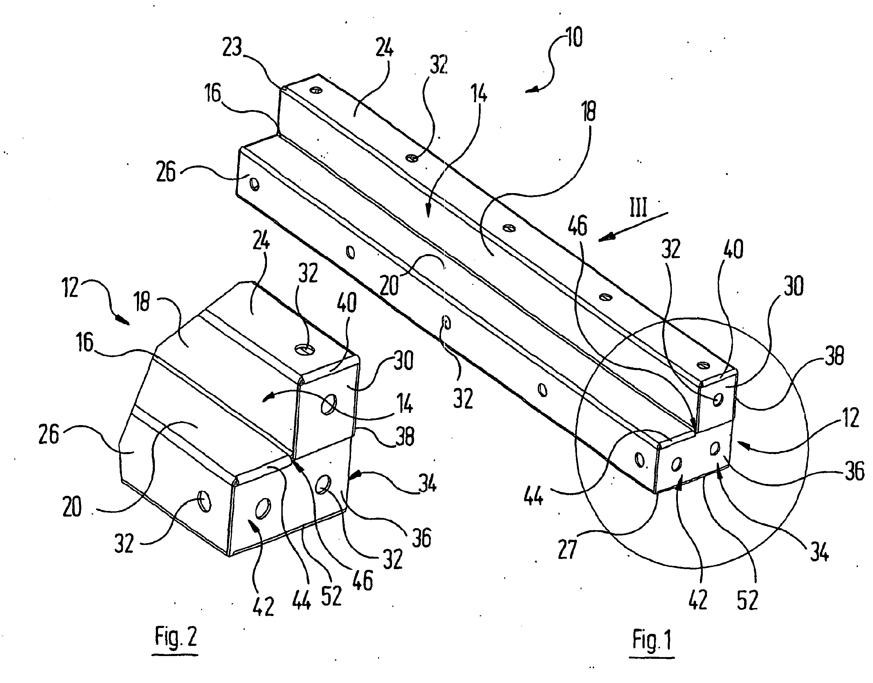

In Figur 1 ist ein insgesamt mit dem Bezugszeichen 10 versehenes Wandelement für einen Flachkanal zur Leitung von gasförmigen Medien gezeigt. Der in der Gesamtheit in Figur 1 nicht gezeigte Flachkanal ist aus einer Mehrzahl solcher Wandelemente 10 und gegebenenfalls flacher Zwischenelemente zusammengesetzt. In Figur 2 ist ein Eckbereich 12 des Wandelements 10 im Detail dargestellt.

Das Wandelement 10 umfaßt eine Kanalwand 14 aus biegsamem Metallblech. Die Kanalwand 14 kann aber auch aus einem anderen biegsamen Material bestehen.

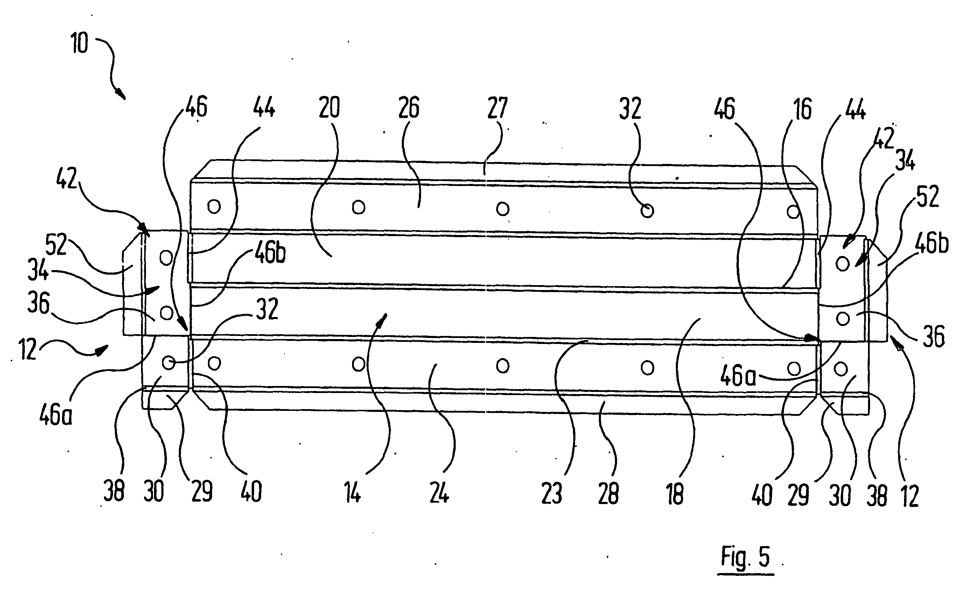

Das ebene Metallblech ist in der in Figur 5 dargestellten und weiter unten noch näher erläuterten Weise geschnitten und anschließend in einer ebenfalls weiter unten näher erläuterten Weise gekantet und zu dem Wandelement 10, wie in Figur 1 dargestellt, einstückig zusammengesetzt.

Die Kanalwand 14 weist zwei entlang einer Wandbiegelinie 16 zueinander rechtwinklig gekantete Wandbereiche 18 und 20 auf, welche das Innere des Flachkanals begrenzen.

An den in Figur 1 vertikalen Wandbereich 18 schließt sich ein sich parallel zur Wandbiegelinie 16 verlaufender erster Randstreifen 24 zum umfangsseitigen Verbinden des Wandelement 10 mit einem weiteren Wandelement 10 an. Der erste Randstreifen 24 ist um eine Randbiegelinie 23 abgekantet und verläuft in Figur 1 horizontal, also parallel zu dem anderen, in Figur 1 horizontalen Wandbereich 20. Die Randbiegelinie 23 verläuft parallel zur Wandbiegelinie 16.

Alle Biegelinien sind in den Figuren 1 bis 6 als Doppellinien dargestellt, um einen Biegeradius anzudeuten.

An den horizontalen Wandbereich 20 schließt sich ein zweiter abgekanteter Randstreifen 26 an, welcher zum Verbinden des Wandelement 10 mit einem weiteren Wandelement 10 in der Figur 1 in horizontaler Richtung dient.

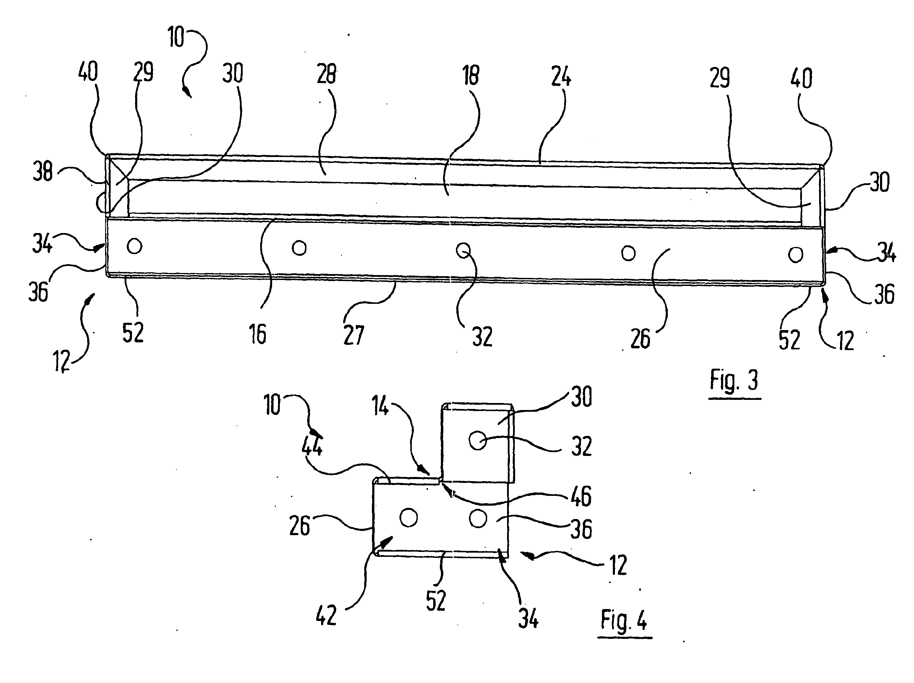

Die Randstreifen 24 und 26 weisen auf ihren dem jeweiligen Wandbereich 18 beziehungsweise 20 abgewandten Seiten jeweils einen zurückgebogenen Stabilisierungsstreifen 27 beziehungsweise 28 auf, welche zur Erhöhung der Festigkeit des Flachkanals beitragen. Die Stabilisierungsstreifen 27 und 28 sind in der Seitenansicht in Figur 3 und in der Draufsicht auf das ungekantete Wandelement 10 in Figur 5 gezeigt.

Die freien Ecken des Stabilisierungsstreifens 28 und des Randstreifens 24 sind jeweils um 45° abgeschnitten, so dass sie nach dem Abkanten des Wandelements 10 an weiter unten näher erläuterten Stabilisierungsstreifen 29 von Randflanschbereichen 30 anliegen, welche ebenfalls an den entsprechenden Ecken um 45° abgeschnitten sind.

Die Randstreifen 24, 26 weisen entlang des Wandelements 10 eine Vielzahl von Bohrungen 32 für Befestigungsschrauben oder Nieten auf.

Die freien Ecken des Stabisierungsstreifens 27 und des Randsteifens 26 sind jeweils um 45° abgeschnitten, so dass sie nach dem Abkanten des Wandelements 10 an weiter unten näher erläuterten Stabilisierungsstreifen 52 von Stirnflanschen 42 anliegen, welche ebenfalls an den entsprechenden Ecken um 45°abgeschnitten sind.

An die Kanalwand 14 schließt sich darüber hinaus an den Stirnseiten des Wandelements 10 jeweils ein senkrecht zur Wandbiegelinie 16 verlaufender Stirnflansch an, der insgesamt mit dem Bezugszeichen 34 versehen ist. Der Stirnflansch 34 ist zum Inneren des Wandelements 10 durch den vertikalen Wandbereich 18 und den horizontalen Wandbereich 20 begrenzt und bildet so den Eckbereich 12. Die Kanalwand 14 und der Stirnflansch 34 sind einstückig ausgebildet.

Der Stirnflansch 34 wird im Folgenden am Beispiel des in Figur 2 im Detail gezeigten, in Figur 1 vorderen Eckbereichs 12 erläutert. Der in Figur 1 hintere Stirnflansch 34 ist entsprechend aufgebaut.

Der Stirnflansch 34 ist im Eckbereich 12 zusammengesetzt aus dem oben schon erwähnten Randflanschbereich 30 und einem Stirnflanscheckbereich 36 eines Stirnflanschstreifens 42.

Der Randflanschbereich 30 schließt sich in ungekantetem Zustand in Richtung der Wandbiegelinie 16 an den Randstreifen 24 des vertikalen Wandbereichs 18 an, wie dies in Figur 5 gezeigt ist. Der Randflanschbereich 30 ist in der Draufsicht (Figur 5) rechteckig. An seinen dem Wandbereich 18 abgewandten, in Figur 5 unteren Rand schließt sich der oben erwähnte Stabilisierungsstreifen 29 an, der auf der dem Randstreifen 24 zugewandten Ecke um 45° abgeschnitten ist.

Die Abmessung des Randflanschbereichs 30 senkrecht zur Wandbiegelinie 16 entspricht der entsprechenden Abmessung des Randstreifens 24.

Der Randflanschbereich 30 ist um eine Randflanschbiegelinie 40, welche senkrecht zur Wandbiegelinie 16 verläuft, um 90° abgekantet.

In ungekantetem Zustand entspricht die Abmessung des Randflanschbereichs 30 in Richtung der Wandbiegelinie 16 dem Abstand zwischen der Wandbiegelinie 16 und der Randbiegelinie 23, so dass der dem Randstreifen 24 abgewandte Rand des Randflanschbereichs 30 in gekantetem Zustand auf Höhe des horizontalen Wandbereichs 20 abschließt (Figuren 1, 2 und 4).

Der Randflanschbereich 30 weist darüber hinaus eine durchgängige Bohrung 32 für eine Schraub- oder Nietverbindung auf.

Der Stirnflanschstreifen 42 ist um eine senkrecht zur Wandbiegelinie 16 verlaufende Stirnbiegelinie 44 gegenüber dem horizontalen Wandbereich 20 um 90° in Figur 1 nach unten gekantet.

Der Stirnflanschstreifen 42 weist außerdem zwei durchgängige Bohrungen 32 zur Aufnahme von Verbindungsschrauben beziehungsweise Nieten auf.

Der quadratische Stirnflanscheckbereich 36 des Stirnflanschstreifens 42 beginnt in ungekantetem Zustand (Figur 5) auf Höhe der Wandbiegelinie 16 und erstreckt sich bis zum Randflanschbereich 30.

In ungekantetem Zustand entspricht die Abmessung des Stirnflanscheckbereichs 36 in Richtung der Wandbiegelinie 16 der Abmessung des Randflanschbereichs 30 in Richtung der Wandbiegelinie 16.

In ungekantetem Zustand entspricht die Abmessung des Stirnflanscheckbereichs 36 senkrecht zur Wandbiegelinie 16 der Abmessung des Randflanschbereichs 30 in dieser Richtung, so dass in abgekantetem Zustand die Konturen der seitlichen, in Figur 1 rechten Ränder des Randflanschbereichs 30 und des Stirnflanscheckbereichs 36 fluchten.

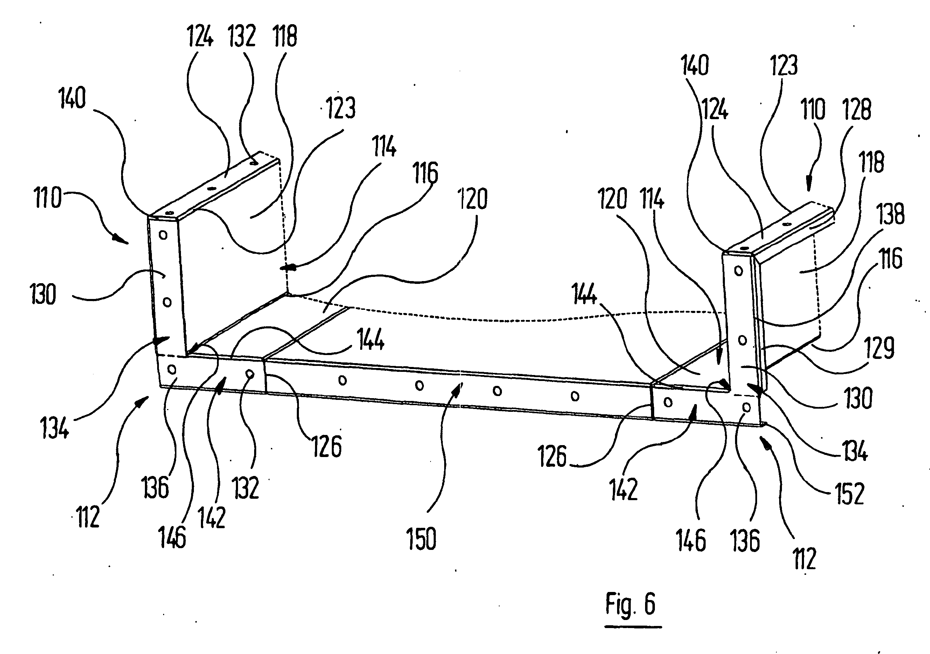

Im vorliegenden Beispiel entspricht in ungekantetem Zustand die Abmessung des Stirnflanscheckbereichs 36 senkrecht zur Wandbiegelinie 16 auch der Abmessung des vertikalen Wandbereichs 18 senkrecht zur Wandbiegelinie 16, so dass in ungekantetem Zustand der in Figur 5 untere Rand des Stirnflanscheckbereichs 36 an dem in Figur 5 oberen Rand des Randflanschbereichs 30 anliegt. Bei einem breiteren vertikalen Wandbereich 18, wie beispielsweise für das zweite Ausführungsbeispiel in Figur 6 gezeigt, ist die Abmessung des Stirnflanscheckbereichs 36 gegenüber der entsprechenden Abmessung des vertikalen Wandbereichs 18 gekürzt.

Der Randflanschbereich 30 und der Stirnflanscheckbereich 36 sind in ungekantetem Zustand durch einen L-förmigen zusammenhängenden Trennschnitt 46 voneinander getrennt (Figur 5). Ein Schenkel 46a des Trennschnitts 46 erstreckt sich in Richtung der Randbiegelinie 23 von der Stirnbiegelinie 44 bis zum äußeren Rand des Randflanschbereichs 30 und des Stirnflanscheckbereichs 36. Der andere Schenkel 46b erstreckt sich in Richtung der Stirnbiegelinie 44 von der Wandbiegelinie 16 bis zur Randbiegelinie 23 und geht dort in den ersten Schenkel 46a über.

Die Herstellung des Wandelements 10 erfolgt wie folgt:
Zunächst wird das in ursprünglichem Zustand rechteckige, ebene Metallblech in der in Figur 5 dargestellten und oben beschriebenen Form mittel Lasertechnik geschnitten. Alternativ kann das Metallblech auch in einer anderen Weise konturiert, beispielsweise gestanzt, werden.

Beim Schneiden werden beidseitig die entsprechenden L-förmigen Trennschnitte 46 angebracht, so dass der Stirnflanscheckbereich 36, der Randflanschbereich 30 und der vertikale Wandbereich 18 voneinander getrennt sind.

Anschließend werden die Stabilisierungsstreifen 27, 28, 29 und 52 jeweils gegenüber den Randstreifen 24, 26 beziehungsweise den Randflanschbereichen 30 und Stirnflanschstreifen 42 um 90° abgekantet.

Daraufhin werden die Stirnflanschstreifen 42 um die Stirnbiegelinie 44 gegenüber dem horizontalen Wandbereich 20, in Figur 1 nach unten beziehungsweise in Figur 5 in die Zeichenebene hinein, um 90° und die Randflanschbereiche 30 gegenüber dem Randstreifen 24 um die Randflanschbiegelinien 40 in die gleiche Richtung abgekantet.

Dann wird der vertikale Wandbereich 18 mit dem an ihn anschließenden Randstreifen 24 um die Wandbiegelinie 16 entgegen der Kantung des Stirnflanschstreifens 42, in Figur 1 nach oben beziehungsweise in Figur 5 aus der Zeichenebene heraus, um 90° gegenüber dem horizontalen Wandbereich 20 gekantet.

Danach wird der Randstreifen 24 mit dem daran hängenden Randflanschbereich 30 um die Randbiegelinie 23 gegenüber dem vertikalen Wandbereich 18 um 90° zum Stirnflanschstreifen 42 hin gekantet, derart, dass die im ungekanteten Zustand (Figur 5) seitlichen Ränder der Randflanschbereiche 30 an den im ungekanteten Zustand dem vertikalen Wandbereich 18 zugewandten Rändern der jeweiligen Stirnflanscheckbereiche 36 anliegen.

Sodann wird der Randstreifen 26 gegenüber dem horizontalen Wandbereich 20 in Richtung des Stirnflanschstreifens 42 um 90° abgekantet, so dass seine seitlichen Ränder an den entsprechenden, in Figur 1 vertikalen Rändern des Stirnflanschstreifens 42 anliegen.

Schließlich werden die sich berührenden Ränder der Randflanschbereiche 30, des vertikalen Wandbereichs 18, der Stirnflanscheckbereiche 36, der Randstreifen 24 und 26, der Stirnflanschstreifen 42 und der Stabilisierungsstreifen 27, 28, 29 und 52 miteinander verschweißt und die Schweißnähte plan geschliffen.

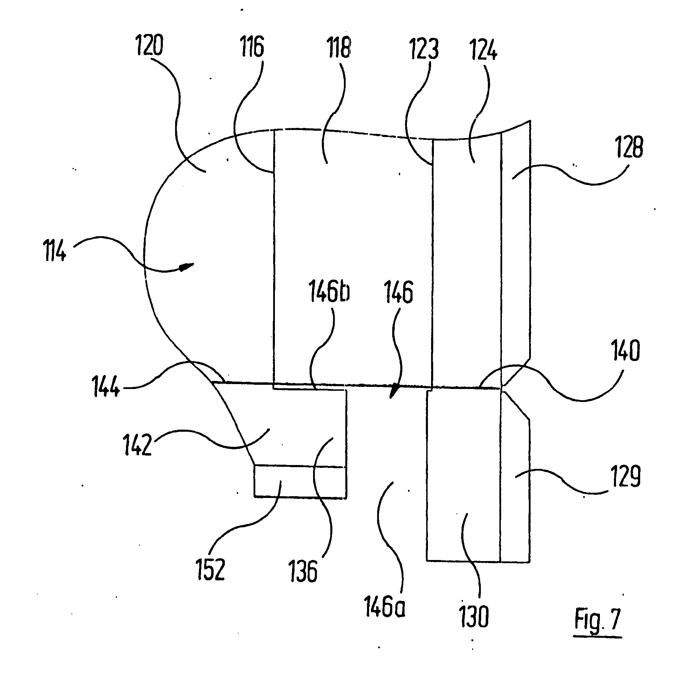

Bei einem zweiten Ausführungsbeispiel, dargestellt in den Figuren 6 und 7, sind diejenigen Elemente, die zu denen des ersten, in den Figuren 1 bis 5 beschriebenen Ausführungsbeispiels ähnlich sind, mit denselben Bezugszeichen zuzüglich 100 versehen, so dass bezüglich deren Beschreibung auf die Ausführungen zum ersten Ausführungsbeispiel Bezug genommen wird. Dieses Ausführungsbeispiel unterscheidet sich von ersten dadurch, dass die Abmessung des vertikalen Wandbereichs 118 senkrecht zur Wandbiegelinie 116 deutlich größer ist als die Abmessungen des Randstreifens 124, des Stirnflanscheckbereichs 136 und des Randflanschbereichs 130 senkrecht zur Wandbiegelinie 116. Um dem Rechnung zu tragen wird statt lediglich eines Trennschnittes 46a zwischen dem Stirnflanscheckbereich 36 und dem Randflanschbereich 30 wie beim ersten Ausführungsbeispiel von dem Stirnflanscheckbereich 136 ein entsprechend breiter Trennstreifen 146a entfernt, so dass auch hier die Abmessung des Randflanschbereichs 130 senkrecht zur Wandbiegelinie 116 in ungekantetem Zustand der Abmessung des Stirnflanscheckbereichs 136 senkrecht zur Wandbiegelinie 116 entspricht.

Beim zweiten Ausführungsbeispiel in Figur 6 sind zwei Wandelemente 110 an ihren Randstreifen 126 über ein entsprechend gekantetes Wandzwischenstück 150 miteinander verbunden, so dass insgesamt ein wannenförmiges Bodenteil des Flachkanals entsteht. Die beiden Wandelemente 110 können alternativ auch direkt mit ihren Randstreifen 126 aneinander befestigt werden, so dass auf das Wandzwischenstück 150 verzichtet werden kann.

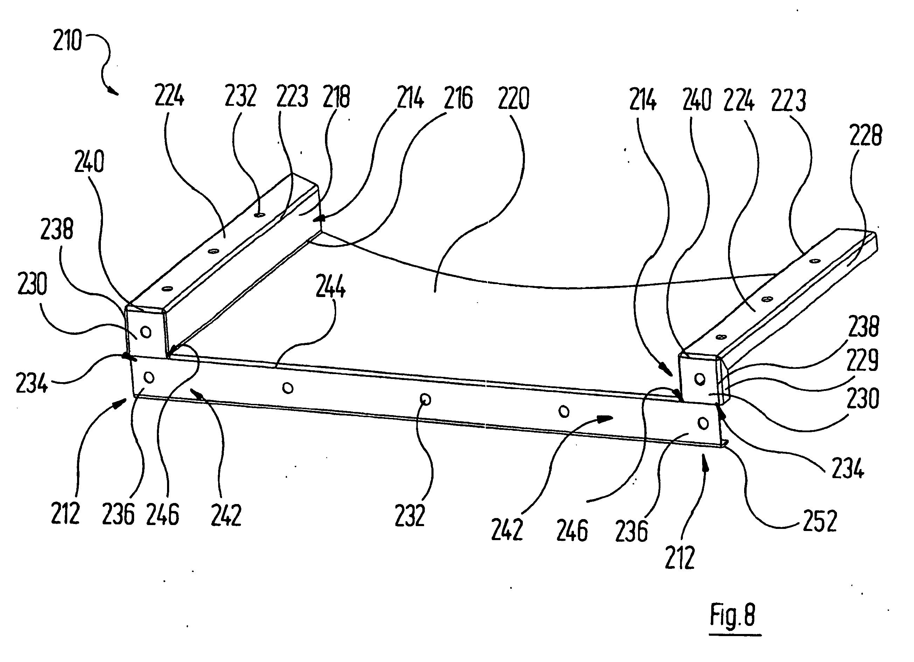

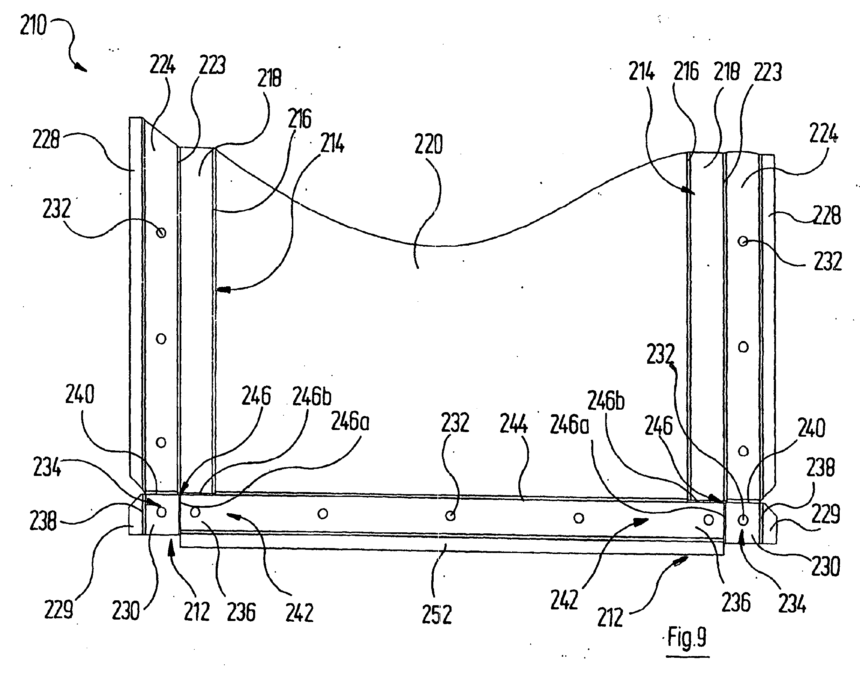

Bei einem dritten Ausführungsbeispiel, dargestellt in den Figuren 8 und 9, sind diejenigen Elemente, die zu denen des zweiten, in den Figuren 6 und 7 beschriebenen Ausführungsbeispiels ähnlich sind, mit denselben Bezugszeichen zuzüglich 100 versehen, so dass bezüglich deren Beschreibung auf die Ausführungen zum zweiten Ausführungsbeispiel Bezug genommen wird. Bei dem dritten Ausführungsbeispiel sind im Unterschied zu dem zweiten. Ausführungsbeispiel die beiden L-förmigen Wandelemente 110 mit dem Wandzwischenstück 150 durch ein einziges U-förmiges Wandelement 210 ersetzt.

Das U-förmige Wandelement 210 umfasst zwei parallele, jeweils einen Randstreifen 224 aufweisende Wandbereiche 218, die mit dem zu ihnen senkrecht verlaufenden Wand-bereich 220 insgesamt wannenförmig verbunden sind.

Bei allen oben beschriebenen Ausführungsbeispielen eines Wandelements 10; 110; 210 beziehungsweise eines Flachkanals können die Kantungen in einer anderen Reihenfolge durchgeführt werden.

## Patentansprüche

1. Flachkanal zur Leitung von gasförmigen Medien mit wenigstens einem einstückigen Wandelement (10; 110; 210) aus biegsamem Material, das eine Kanalwand (14; 114; 214) umfasst, die zwei entlang einer Wandbiegelinie (16; 116; 216) zueinander rechtwinklig gebogene Wandbereiche (18, 20; 118, 120; 218, 220) aufweist, wobei wenigstens einer der Wandbereiche (18; 118; 218) einen parallel zur Wandbiegelinie (16; 116; 216) verlaufende Randstreifen (24; 124; 224) zum umfangsseitigen Verbinden mit einem weiteren Wandelement (10; 110; 210) hat, wobei weiter das Wandelement (10; 110; 210) einen senkrecht zur Wandbiegelinie (16; 116; 216) verlaufenden zumindest an einer durch die Wandbereiche (18, 20; 118, 120; 218, 220) gebildeten Ecke (12; 112; 212) umlaufenden Stirnflansch (34; 134; 234) aufweist, und der Stirnflansch (34; 134; 234) zusammengesetzt ist aus
a) einem Randflanschbereich (30; 130; 230), der sich in Richtung der Wandbiegelinie (16; 116; 216) an den Randstreifen (24; 124; 224) des einen Wandbereichs (18; 118; 218) anschließt und gegenüber dem Randstreifen (24; 124; 224) rechtwinklig abgebogen ist,
b) einem Stirnflanschstreifen (42; 142; 242), der senkrecht zur Wandbiegelinie (16; 116; 216) des anderen Wandbereichs (20; 120; 220) abgebogen ist;
**dadurch gekennzeichnet, dass**
der Randflanschbereich (30; 130; 230) und ein Stirnflanscheckbereich (36; 136; 236) des Stirnflanschstreifens (42; 142; 242) vor der Biegung des Wandelements (10; 110; 210) durch einen etwa L-förmigen zusammenhängenden Trennbereich (46; 146; 246) voneinander getrennt sind, dessen einer Schenkel (46a; 146a; 246a) sich in Richtung der Randbiegelinie (23; 123; 223) des abgebogenen Randstreifens (24; 124; 224) von der Stirnbiegelinie (44; 144; 244) des abgebogenen Stirnflanschstreifens (42; 142; 242) bis zum Rand des ungebogenen Wandelements (10; 110; 210) erstreckt und dessen anderer Schenkel (46b; 146b; 246b) sich in Richtung der Stirnbiegelinie (44; 144; 244) von der Wandbiegelinie (16; 116; 216) bis zur Randbiegelinie (23; 123; 223) erstreckt und dort in den ersten Schenkel (46a; 146a; 246a) übergeht.

2. Flachkanal nach Anspruch 1, **dadurch gekennzeichnet, dass** die Abmessung des Randflanschbereichs (30; 130; 230) in Richtung der Wandbiegelinie (16; 116: 216) in ungebogenem Zustand so groß ist wie der Abstand zwischen der Wandbiegelinie (16; 116; 216) und der Randbiegelinie (23; 123; 223).

3. Flachkanal nach Anspruch 1 oder 2, **dadurch gekennzeichnet, dass** die Abmessung des Randflanschbereichs (30; 130; 230) in Richtung der Wandbiegelinie (16; 116; 216) in ungebogenem Zustand wenigstens so groß ist wie die Abmessung des Stirnflanscheckbereichs (36; 136; 236) in Richtung der Wandbiegelinie (16; 116: 216).

4. Flachkanal nach einem der vorhergehenden Ansprüche, **dadurch gekennzeichnet, dass** die Abmessung des Randflanschbereichs (30; 130; 230) senkrecht zur Wandbiegelinie (16; 116; 216) in ungebogenem Zustand der Abmessung des Stirnflanscheckbereichs (36; 136; 236) senkrecht zur Wandbiegelinie (16; 116; 216) entspricht.

5. Flachkanal nach einem der vorhergehenden Ansprüche, **dadurch gekennzeichnet, dass** der Stirnflansch (34; 134; 234) wenigstens im Bereich des Stirnflanschstreifens (42; 142; 242) einen zurückgebogenen Stabilisierungsstreifen (52; 152; 252) aufweist.

6. Flachkanal nach einem der vorhergehenden Ansprüche, **dadurch gekennzeichnet, dass** die Abmessung des Stirnflanscheckbereichs (36) in Richtung der Wandbiegelinie (16) ausschließlich des Stabilisierungsstreifens (52) in ungebogenem Zustand der Abmessung des Randflanschbereichs (30) in Richtung der Wandbiegelinie (16) entspricht.

7. Flachkanal nach einem der vorhergehenden Ansprüche, **dadurch gekennzeichnet, dass** die angrenzenden Ränder des Randflanschbereichs (30; 130; 230) und des Stirnflanscheckbereichs (36; 136; 236) miteinander verschweißt, insbesondere stumpfgeschweißt, sind.

8. Flachkanal nach einem der vorhergehenden Ansprüche, **dadurch gekennzeichnet, dass** zwei Wandelemente (110) an einander entsprechenden Wandbereichen (120) mit jeweils einem Randstreifen (126) mittelbar oder unmittelbar miteinander verbunden sind.

9. Flachkanal nach Anspruch 8, **dadurch gekennzeichnet, dass** die beiden Wandelemente (110) über ein Wandzwischenstück (150) miteinander verbunden sind.

10. Flachkanal nach einem der Ansprüche 1 bis 7, **dadurch gekennzeichnet, dass** das Wandelement (210) zwei parallele, jeweils einen Randstreifen (224) aufweisende Wandbereiche (218) umfasst, die mit dem zu ihnen senkrecht verlaufenden Wandbereich (220) insgesamt wannenförmig verbunden sind.

11. Flachkanal nach einem der vorhergehenden Ansprüche, **dadurch gekennzeichnet, dass** das Wandelement (10; 110; 210) aus einer ebenen Platte insbesondere mittels Lasertechnik geschnitten oder gestanzt und anschließend insbesondere winklig gebogen, insbesondere gekantet, ist.

12. Flachkanal nach einem der vorhergehenden Ansprüche, **dadurch gekennzeichnet, dass** das Wandelement (10; 110; 210) aus Metall, insbesondere Blech, ist.

## Claims

1. Flat duct for conveying gaseous media, having at least one one-piece wall element (10; 110; 210) of flexible material which comprises a duct wall (14; 114; 214) which has two wall regions (18, 20; 118, 120; 218, 220) bent at a right angle to one another along a wall bending line (16; 116; 216), at least one of the wall regions (18; 118; 218) having an edge strip (24; 124; 224) extending parallel to the wall bending line (16; 116; 216) and intended for peripheral connection to a further wall element (10; 110; 210), the wall element (10; 110; 210) further having an end flange (34; 134; 234) which extends perpendicularly to the wall bending line (16; 116; 216) and runs around at least at a corner (12; 112; 212) formed by the wall regions (18, 20; 118, 120; 218, 220), and the end flange (34) being composed of
a) an edge flange region (30; 130; 230) which adjoins the edge strip (24; 124; 224) of one wall region (18; 118; 218) in the direction of the wall bending line (16; 116; 216) and is bent at a right angle with respect to the edge strip (24; 124; 224),
b) an end flange strip (42; 142; 242) which is bent perpendicularly to the wall bending line (16; 116; 216) of the other wall region (20; 120; 220);
**characterised in that**
the edge flange region (30; 130; 230) and an end flange corner region (36; 136; 236) of the end flange strip (42; 142; 242) are separated from one another, prior to the bending of the wall element (10; 110; 210), by an approximately L-shaped, connected separating region (46; 146; 246) of which one leg (46a; 146a; 246a) extends in the direction of the edge bending line (23; 123; 223) of the bent edge strip (24; 124; 224) from the end bending line (44; 144; 244) of the bent end flange strip (42; 142; 242) to the edge of the unbent wall element (10; 110; 210), and of which the other leg (46b; 146b; 246b) extends in the direction of the end bending line (44; 144; 244) from the wall bending line (16; 116; 216) to the edge bending line (23; 123; 223) and merges there into the first leg (46a; 146a; 246a).

2. Flat duct according to Claim 1, **characterised in that** the dimension of the edge flange region (30; 130; 230) in the direction of the wall bending line (16; 116; 216) in the unbent state is as great as the distance between the wall bending line (16; 116; 216) and the edge bending line (23; 123; 223).

3. Flat duct according to Claim 1 or 2, **characterised in that** the dimension of the edge flange region (30; 130; 230) in the direction of the wall bending line (16; 116; 216) in the unbent state is at least as great as the dimension of the end flange corner region (36; 136; 236) in the direction of the wall bending line (16; 116; 216).

4. Flat duct according to one of the preceding claims, **characterised in that** the dimension of the edge flange region (30; 130; 230) perpendicularly to the wall bending line (16; 116; 216) in the unbent state corresponds to the dimension of the end flange corner region (36; 136; 236) perpendicularly to the wall bending line (16; 116; 216).

5. Flat duct according to one of the preceding claims, **characterised in that** the end flange (34; 134; 234) has a bent-back stabilising strip (52; 152; 252) at least in the region of the end flange strip (42; 142; 242).

6. Flat duct according to one of the preceding claims, **characterised in that** the dimension of the end flange corner region (36) in the direction of the wall bending line (16), excluding the stabilising strip (52), in the unbent state corresponds to the dimension of the edge flange region (30) in the direction of the wall bending line (16).

7. Flat duct according to one of the preceding claims, **characterised in that** the adjacent edges of the edge flange region (30; 130; 230) and of the end flange corner region (36; 136; 236) are welded, in particular butt-welded, to one another.

8. Flat duct according to one of the preceding claims, **characterised in that** two wall elements (110) are indirectly or directly connected to one another at mutually corresponding wall regions (120) each with an edge strip (126).

9. Flat duct according to Claim 8, **characterised in that** the two wall elements (110) are connected to one another via a wall connecting piece (150).

10. Flat duct according to one of Claims 1 to 7, **characterised in that** the wall element (210) comprises two parallel wall regions (218) which each have an edge strip (224) and are connected to the wall region (220) extending perpendicularly to them, to form overall a trough shape.

11. Flat duct according to one of the preceding claims, **characterised in that** the wall element (10; 110; 210) is cut or punched from a flat plate in particular by means of laser technology, and subsequently in particular angularly bent, in particular folded.

12. Flat duct according to one of the preceding claims, **characterised in that** the wall element (10; 110; 210) is made of metal, in particular sheet metal.

## Revendications

1. Conduit plat pour le transport de fluides gazeux, avec au moins un élément de paroi (10 ; 110 ; 210) d'un seul tenant en matériau souple, qui comprend une paroi de conduit (14 ; 114 ; 214) qui présente deux régions de paroi (18, 20 ; 118, 120 ; 218, 220) pliées en angle droit l'une par rapport à l'autre le long d'une ligne de pliage de paroi (16 ; 116 ; 216), sachant qu'au moins une (18 ; 118 ; 218) des régions de paroi possède une bande de bord (24 ; 124 ; 224) s'étendant parallèlement à la ligne de pliage de paroi (16 ; 116 ; 216) et destinée à l'assemblage périphérique avec un autre élément de paroi (10 ; 110 ; 210), sachant en outre que l'élément de paroi (10 ; 110 ; 210) présente une bride frontale (34 ; 134 ; 234) s'étendant perpendiculairement à la ligne de pliage de paroi (16 ; 116 ; 216) et entourant au moins un coin (12 ; 112 ; 212) formé par les régions de paroi (18, 20 ; 118, 120 ; 218, 220), et que la bride frontale (34 ; 134 ; 234) est composée de :
a) une région de bride de bord (30 ; 130 ; 230) qui, dans la direction de la ligne de pliage de paroi (16 ; 116 ; 216), se raccorde à la bande de bord (24 ; 124 ; 224) de l'une (18 ; 118 ; 218) des régions de paroi et est repliée en angle droit par rapport à la bande de bord (24 ; 124 ; 224),
b) une bande de bride frontale (42 ; 142 ; 242), qui est repliée perpendiculairement à la ligne de pliage de paroi (16 ; 116 ; 216) de l'autre région de paroi (20 ; 120 ; 220) ; **caractérisé en ce que** la région de bride de bord (30 ; 130 ; 230) et une région de coin de bride frontale (36 ; 136 ; 236) de la bande de bride frontale (42 ; 142 ; 242) sont, avant le pliage de l'élément de paroi (10 ; 110 ; 210), séparées l'une de l'autre par une région de séparation continue (46 ; 146 ; 246) approximativement en forme de L, dont une branche (46a ; 146a ; 246a) s'étend, dans la direction de la ligne de pliage de bord (23 ; 123 ; 223) de la bande de bord repliée (24 ; 124 ; 224), depuis la ligne de pliage frontale (44 ; 144 ; 244) de la bande de bride frontale repliée (42 ; 142 ; 242) jusqu'au bord de l'élément de paroi non plié (10 ; 110 ; 210), et dont l'autre branche (46b ; 146b ; 246b) s'étend, dans la direction de la ligne de pliage frontale (44 ; 144 ; 244), depuis la ligne de pliage de paroi (16 ; 116 ; 216) jusqu'à la ligne de pliage de bord (23 ; 123 ; 223), où elle se raccorde à la première branche (46a ; 146a ; 246a).

2. Conduit plat selon la revendication 1, **caractérisé en ce que** la dimension de la région de bride de bord (30 ; 130 ; 230) dans la direction de la ligne de pliage de paroi (16 ; 116 ; 216) dans l'état non plié est au moins égale à la distance entre la ligne de pliage de paroi (16 ; 116 ; 216) et la ligne de pliage de bord (23 ; 123 ; 223).

3. Conduit plat selon la revendication 1 ou 2, **caractérisé en ce que** la dimension de la région de bride de bord (30 ; 130 ; 230) dans la direction de la ligne de pliage de paroi (16 ; 116 ; 216) dans l'état non plié est au moins égale à la dimension de la région de coin de bride frontale (36 ; 136 ; 236) dans la direction de la ligne de pliage de paroi (16 ; 116 ; 216).

4. Conduit plat selon l'une des revendications précédentes, **caractérisé en ce que** la dimension de la région de bride de bord (30 ; 130 ; 230) perpendiculairement à la ligne de pliage de paroi (16 ; 116 ; 216) dans l'état non plié correspond à la dimension de la région de coin de bride frontale (36 ; 136 ; 236) perpendiculairement à la ligne de pliage de paroi (16 ; 116 ; 216).

5. Conduit plat selon l'une des revendications précédentes, **caractérisé en ce que** la bride frontale (34 ; 134 ; 234) présente, au moins dans la région de la bande de bride frontale (42 ; 142 ; 242), une bande de stabilisation repliée (52 ; 152 ; 252).

6. Conduit plat selon l'une des revendications précédentes, **caractérisé en ce que** la dimension de la région de coin de bride frontale (36) dans la direction de la ligne de pliage de paroi (16) correspond dans l'état non plié, en excluant la bande de stabilisation (52), à la dimension de la région de bride de bord (30) dans la direction de la ligne de pliage de paroi (16).

7. Conduit plat selon l'une des revendications précédentes, **caractérisé en ce que** les bords adjacents de la région de bride de bord (30 ; 130 ; 230) et de la région de coin de bride frontale (36 ; 136 ; 236) sont mutuellement assemblés par soudage, notamment par soudage bord à bord.

8. Conduit plat selon l'une des revendications précédentes, **caractérisé en ce que** deux éléments de paroi (110) sont indirectement ou directement reliés entre eux sur des régions de paroi correspondantes (120) par une bande de bord respective (126).

9. Conduit plat selon la revendication 8, **caractérisé en ce que** les deux éléments de paroi (110) sont reliés entre eux via une pièce intermédiaire de paroi (150).

10. Conduit plat selon l'une des revendications 1 à 7, **caractérisé en ce que** l'élément de paroi (210) comprend deux régions de paroi parallèles (218); présentant chacune une bande de bord (224), qui sont reliées globalement en forme de cuvette à la région de paroi (220) s'étendant perpendiculairement à elles.

11. Conduit plat selon l'une des revendications précédentes, **caractérisé en ce que** l'élément de paroi (10 ; 110 ; 210) est découpé ou estampé à partir d'une plaque plane, notamment au laser, puis est ensuite plié notamment angulairement, en particulier à vive arête.

12. Conduit plat selon l'une des revendications précédentes, **caractérisé en ce que** l'élément de paroi (10 ; 110 ; 210) est en métal, notamment en tôle.
